# EUROPEAN PATENT APPLICATION

(11) **EP 4 505 855 A1**
(43) Date of publication of application: **12.02.2025**
(21) Application number: 23788004.2
(22) Date of filing: 06.02.2023
(51) Int. Cl.: A01D 34/64, A01B 69/00

(54) **UNMANNED TRAVELLING WORK MACHINE SYSTEM**

(30) Priority: 13.04.2022 JP 2022066266
(71) Applicant: Yamabiko Corporation, Ohme-shi Tokyo 198-8760 (JP)
(72) Inventor: NAKAI Yoshihiro, Ohme-shi, Tokyo 198-8760 (JP); FUKUDA Makoto, Ohme-shi, Tokyo 198-8760 (JP); SAITO Soya, Ohme-shi, Tokyo 198-8760 (JP); ENDO Hidemitsu, Ohme-shi, Tokyo 198-8760 (JP)
(74) Representative: Canzler & Bergmeier Patentanwälte Partnerschaft mbB
(86) International application number: PCT/JP2023/003820
(87) International publication number: WO 2023/199581

(57) **Abstract**

Provided is an unmanned travelling work machine system in which work is performed while a vehicle body is caused to travel in an unmanned state as a result of the operation of a remote transmitter, wherein said system is configured so that the operator of the remote transmitter can perform operations without discomfort. The unmanned travelling work machine system is configured so that the remote transmitter, which causes the vehicle body of the unmanned travelling work machine to travel in an unmanned state, is provided with an operation lever for causing the vehicle body to move forward or move backward. The unmanned travelling work machine system comprises a switching unit for switching the advancing direction of the vehicle body corresponding to one operation direction of the operation lever, from forward to backward, or from backward to forward.

## Description

### Technical field

The present invention relates to an unmanned traveling working machine system.

### Background art

An unmanned traveling working machine that performs work while being remotely controlled and traveling without an operator is known. This unmanned traveling working machine includes a working device and a traveling device which are driven by an engine. It receives operation signals from a remote transmitter located far from the machine body to change the engine speed and switch between forward travel and backward travel (see Patent Literature 1 mentioned below).

### Citation list

### Patent Literature

PTL1: Japanese Patent Application Laid-Open No. 2011-142900

### Summary of Invention

### Technical Problem

The "front" side and the "rear" side of the machine body are set to be unchanged in the conventional unmanned traveling working machine. The machine body can be traveled forward by moving a control lever of the remote transmitter in "forward" direction. Meanwhile, the machine body can be traveled backward by moving the control lever in "backward" direction. By this means, the machine body is moved forward and backward to reciprocate.

In this case, the operator of the remote transmitter needs to operate the control lever while checking whether the unmanned traveling working machine is safely traveling. Therefore, the operator faces the traveling direction of the machine body to visually recognize from behind the machine body during the operation. When the machine body is reciprocated forward and backward, the direction in which the operator faces does not necessarily coincide with the front direction of the machine body. In this case, the operator moves the control lever in the backward direction even though he intends to move the machine body in the same direction he is facing. This causes a problem that the operator feels uncomfortable with the operation.

The present invention is proposed to address the above-described problem. Therefore, the object of this invention is to enable an operator to operate a remote transmitter without feeling uncomfortable in an unmanned traveling working machine system configured to perform work while traveling the machine body without an operator by operating the remote transmitter.

### Solution to Problem

To overcome the problem, the invention provides an unmanned traveling working machine system including a remote transmitter configured to be operated to travel a machine body without an operator to perform work. The remote transmitter includes a control lever unit and a forward-and-backward switching section. The control lever unit is configured to move the machine body forward or backward, and the forward-and-backward switching section is configured to switch the traveling direction of the machine body from forward to backward or from backward to forward corresponding to one operating direction of the control lever unit.

### Advantageous Effect of Invention

According to the unmanned traveling working machine system having the above-described features, the forward-and-backward switching section is switched to coincide with the direction in which the operator of the remote transmitter faces; and therefore, it is possible to operate the control lever without feeling uncomfortable when the unmanned traveling working machine is traveled forward or backward.

### Brief Description of Drawings

Fig. 1 is a view for illustrating an example of the schematic configuration of an unmanned traveling working machine;
Fig. 2 is a view for illustrating an example of the system configuration of an unmanned traveling working machine system;
Fig. 3 is a view for illustrating an example of the configuration of a remote transmitter including a forward-and-backward switching section;
Fig. 4 is a view for illustrating an example of the configuration of the remote transmitter including the forward-and-backward switching section;
Fig. 5 is a view for illustrating an example of an operating section of the remote transmitter; and
Fig. 6 is views for illustrating examples of using the unmanned traveling working machine system according to an embodiment of the invention ((a) shows a state in which a machine body is traveled forward in the direction in which an operator faces; (b) shows a state in which the machine body is traveled backward in the direction in which the operator faces).

### Description of Embodiments

Hereinafter, an embodiment of the present invention will be described with reference to the drawings. In the description below, the same reference numbers in the different drawings indicate the same functional parts, and therefore repeated description for each of the drawings is omitted.

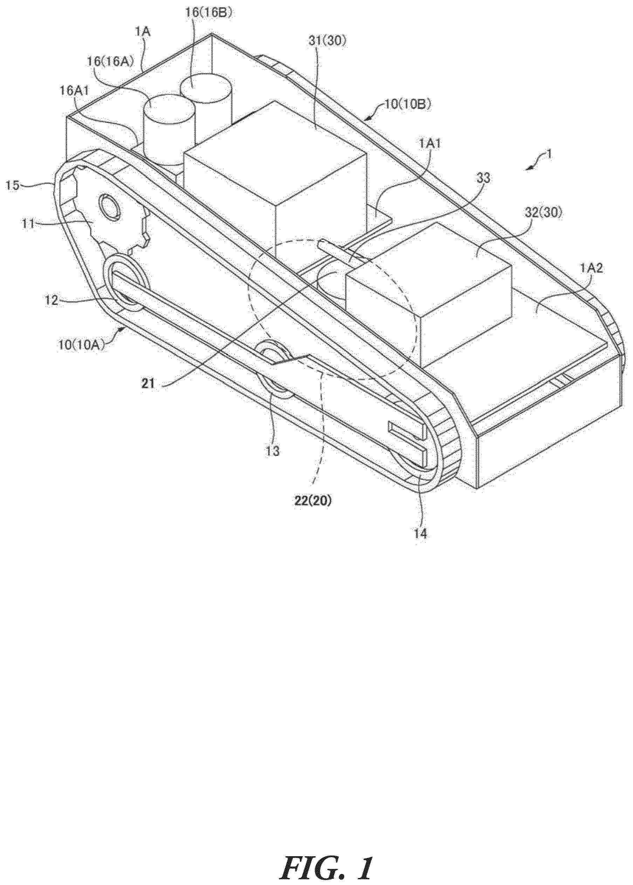

As illustrated in Fig. 1, an unmanned traveling working machine 1 includes a traveling device 10 (10A and 10B) configured to travel by remote control, a machine body 1A configured to support the traveling device 10 (10A and 10B), and a working device 20 located at the center of the machine body 1A. Here, the working device 20 is supported by an elevator mechanism (not illustrated) with respect to the machine body 1A so as to be able to move up and down.

In the illustrated example, the traveling device 10 is a crawler type traveling device including a pair of right and left traveling parts 10A and 10B. Each of the traveling parts 10A and 10B includes a drive sprocket 11, driven wheels 12, 13, and 14, and a crawler 15 wound around them; the drive sprockets 11 are driven by traveling device drive motors 16 (16A and 16B) respectively. However, this is by no means limiting.

The traveling device drive motors 16 include the traveling device drive motor 16A to drive the left traveling part 10A and the traveling device drive motor 16B to drive the right traveling part 10B. The traveling device drive motors 16A and 16B are supported by a support 1A1 fixed to the machine body 1A; they rotate the drive sprockets 11 of the traveling parts 10A and 10B respectively via a gearbox 16A1.

In the illustrated example, the working device 20 includes a working device drive motor 21 and a mower blade 22 rotated by the working device drive motor 21. The working device 20 is configured to perform work for mowing grass on the ground while the machine body 1A is traveled by the traveling device 10. The working device 20 is not limited to this in the embodiment of the invention, but it may perform any kind of work, for example, work for fertilizing, cultivating, dispersing liquid, and spraying liquid, as long as the working device 20 performs work while the machine body is traveled by remote control.

The unmanned traveling working machine 1 includes drive sources 30 of the traveling device 10 and the working device 20. For example, one of the drive sources 30 is an engine unit 31, and the other is a power generator unit 32. The engine unit 31 is placed on the support 1A1 fixed to the machine body 1A, and the power generator unit 32 is placed on a support 1A2 fixed to the machine body 1A in this example.

The engine unit 31 is connected to the power generator unit 32 via a propeller shaft 33. The rotation of the output shaft of the engine unit 31 is transmitted to the power generator unit 32 via the propeller shaft 33 to actuate the power generator unit 32. Then, the power generator unit 32 outputs electric power to actuate the traveling device drive motor 16 and the working device drive motor 21.

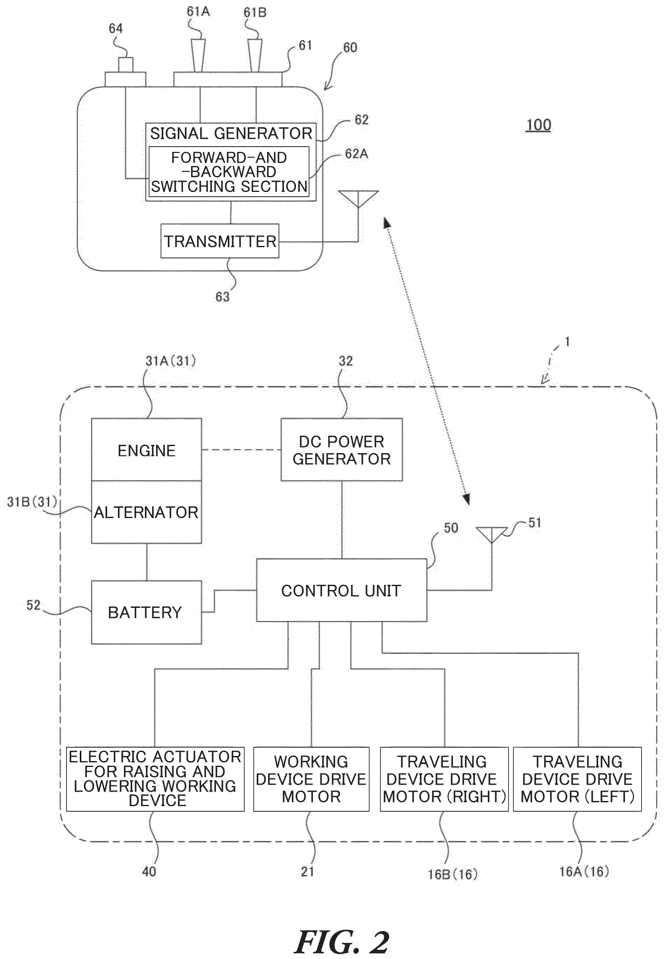

As illustrated in Fig. 2, an unmanned traveling working machine system 100 according to an embodiment of the invention includes the above-described unmanned working traveling machine 1 and a remote transmitter 60 configured to remotely control the unmanned traveling working machine 1.

In the unmanned traveling working machine system 100, an operation signal transmitted wirelessly from the remote transmitter 60 is received by a receiver 51 of the unmanned traveling working machine 1, and a control unit 50 outputs a control signal in response to the received operation signal.

The control unit 50 is provided in a control box (not illustrated) provided in the machine body 1A. Electric power supplied by a DC power generator of the power generator unit 32 placed on the machine body 1A serves as a power source of the control unit 50. In addition, a battery 52 provided in the machine body 1A serves as an auxiliary power source of the control unit 50. The battery 52 is charged with electric power from an alternator 31B which is rotated by the engine 31A of the engine unit 31. As described above, the engine 31A of the engine unit 31 is a drive source of the power generator unit 32.

The control unit 50 respectively applies drive currents to an electric actuator 40 for raising and lowering the working device, the working device drive motor 21, and the traveling device drive motors 16A and 16B depending on the control signals via a switching element (not illustrated) of the control unit 50 to control their operation.

The traveling device drive motors 16A and 16B are rotated forward or backward in the same direction to travel the unmanned traveling working machine 1 forward or backward. Here, the traveling speed of the unmanned traveling working machine 1 traveling forward or backward is controlled by controlling the rotational speeds of the traveling device drive motors 16A and 16B. By controlling the balance between the rotational speeds of the traveling device drive motors 16A and 16B, it is possible to steer the unmanned traveling working machine 1. It is also possible to turn the unmanned traveling working machine 1 there by adjusting the rotating direction of the traveling device drive motors 16a and 16B.

The rotational speed of the mower blade 22 is controlled by controlling the rotational speed of the working device drive motor 21. The mower blade 22 is rotated forward or backward by rotating the working device drive motor 21 forward or backward.

The remote transmitter 60 includes a control lever unit 61. A signal indicating the manipulated variable of the control lever unit 61 is inputted to a signal generator 62; the signal generator 62 outputs an operation signal depending on the operating direction or the manipulated variable of the control lever unit 61. Then, the outputted operation signal is transmitted to the receiver 51 of the unmanned traveling working machine 1 via a transmitter 63.

The control lever unit 61 of the remote transmitter 60 includes at least a forward-and-backward traveling control lever 61A to travel the machine body 1A of the unmanned traveling working machine 1 forward or backward. The control lever unit 61 also includes a right-and-left steering control lever 61B to steer the unmanned traveling working machine 1 right and left.

The signal generator 62 of the remote transmitter 60 includes a forward-and-backward switching section 62A configured to switch the traveling direction of the machine body 1A from forward to backward or from backward to forward corresponding to one operating direction of the forward-and-backward traveling control lever 61A. The forward-and-backward switching section 62A is switched by the selector switch 64 to switch the traveling direction of the machine body 1A corresponding to one operating direction of the forward-and-backward traveling control lever 61A.

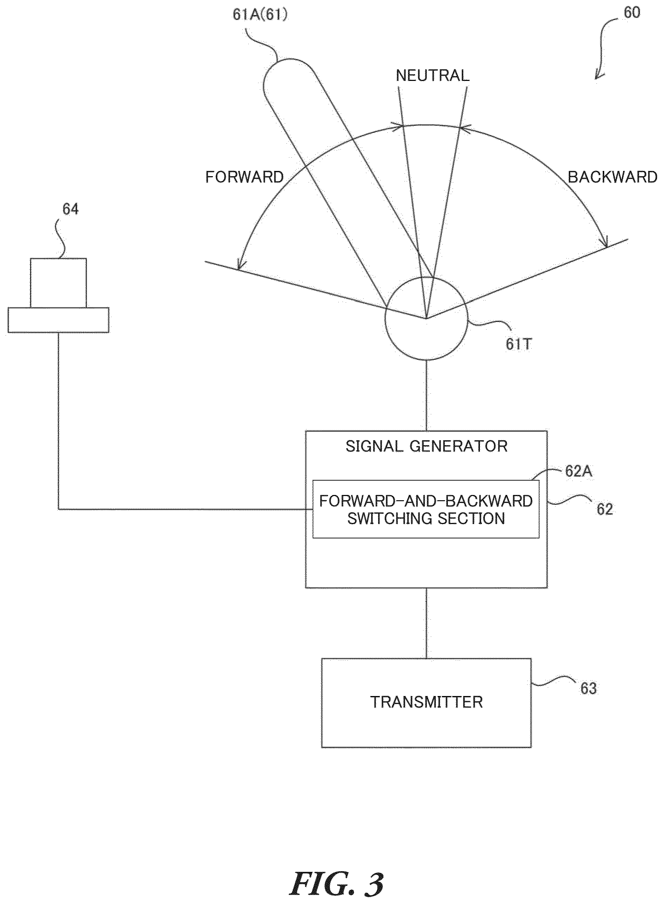

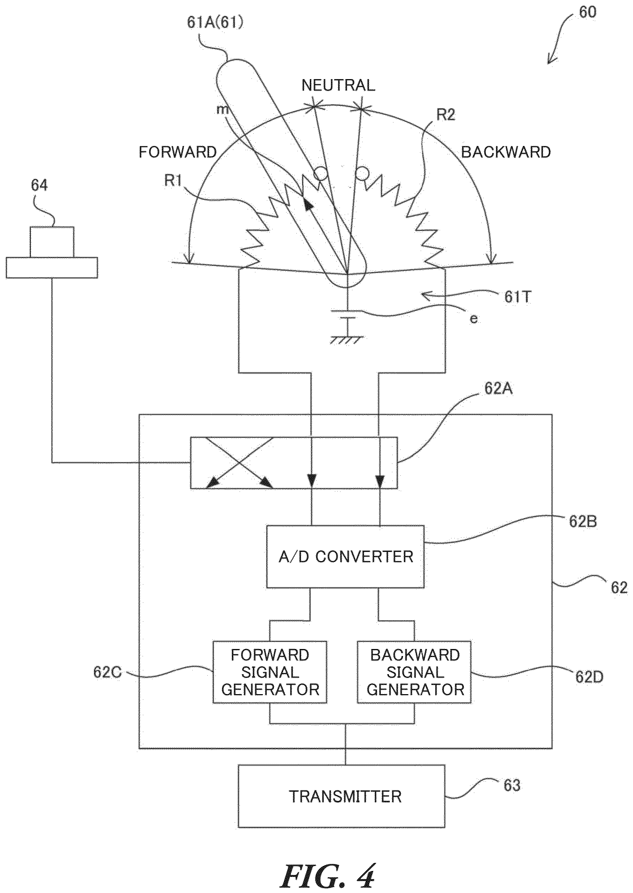

With reference to Fig. 3 and Fig. 4, the configuration of the remote transmitter 60 including the forward-and-backward switching section 62A will be more specifically described.

As illustrated in Fig. 3, the operated state of the forward-and-backward traveling control lever 61A of the control lever unit 61 is detected by a control lever position detector 61T. The control lever position detector 61T detects the forward-and-backward traveling control lever 61A being located at a neutral position, a forward operation position, or a backward operation position. When the control lever position detector 61T detects the forward-and-backward traveling control lever 61A being located at the forward operation position or the backward operation position, it inputs a signal indicating a manipulated variable which is increased as the position is apart from the neutral position to the signal generator 62. Meanwhile, the control lever position detector 61T inputs a zero signal to the signal generator 62 when it detects the forward-and-backward traveling control lever 61A being located at the neutral position.

The signal generator 62 outputs a forward operation signal or a backward operation signal in response to the signal from the control lever position detector 61T. In the default state of the forward-and-backward switching section 62A, the signal generator 62 outputs the forward operation signal when the control lever position detector 61T outputs the signal indicating the forward operation position; it outputs the backward operation signal when the control lever position detector 61T outputs the signal indicating the backward operation position. On the other hand, in the case where the forward-and-backward switching section 62A is switched by the selector switch 64, the signal generator 62 outputs the backward operation signal when the control lever position detector 61T outputs the signal indicating the forward operation position, and it outputs the forward operation signal when the control lever position detector 61T outputs the signal indicating the backward operation position.

Fig. 4 shows a concrete example of the control lever position detector 61T and the forward-and-backward switching section 62A. However, this is by no means limiting. The control lever position detector 61T illustrated in Fig. 4 outputs the value of a current flowing through a resistance circuit R1 as a detected value when a sliding contact point m connected to a DC power source e of the forward-and-backward traveling control lever 61A slides on the resistance circuit R1 in forward operation positions. Also, the control lever position detector 61T outputs the value of a current flowing through a resistance circuit R2 as a detected value when the sliding contact point m slides on the resistance circuit R2 in backward operation positions. Meanwhile, the current value is zero when the sliding contact point m is located at the neutral position.

In the signal generator 62, the current value of the resistance circuit R1 outputted from the control lever position detector 61T is inputted to a forward signal generator 62C via an A/D converter 62B when the switching circuit of the forward-and-backward switching section 62A is in the default state as illustrated. The forward signal generator 62C outputs a forward operation signal to the transmitter 63, and the current value of the resistance circuit R2 outputted from the control lever position detector 61T is inputted to a backward signal generator 62D via the A/D converter 62B. Then, the backward signal generator 62D outputs a backward operation signal to the transmitter 63.

On the other hand, the current value of the resistance circuit R1 outputted from the control lever position detector 61T is inputted to the backward signal generator 62D via the A/D converter 62B when the switching circuit of the forward-and-backward switching section 62A in the signal generator 62 is switched by the selector switch 64. The backward signal generator 62D outputs a backward operation signal to the transmitter 63; the current value of the resistance circuit R2 outputted from the control lever position detector 61T is inputted to the forward signal generator 62C via the A/D converter 62B. Then, the forward signal generator 62C outputs a forward operation signal to the transmitter 63.

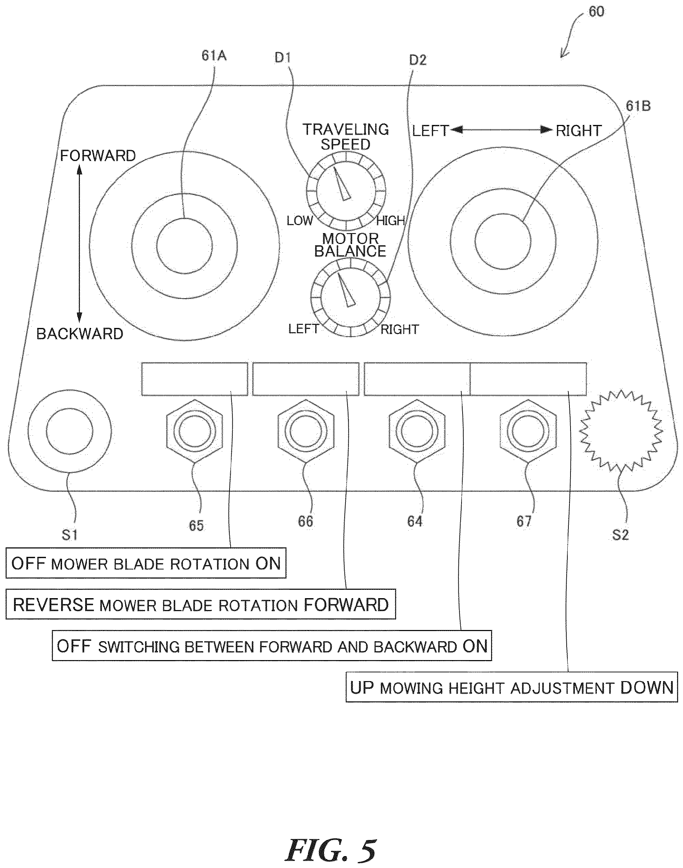

Fig. 5 shows an example of an operating unit of the remote transmitter 60. In addition to the forward-and-backward traveling control lever 61A, the right-and-left steering control lever 61B, and the selector switch 64 described above, the operating unit of the remote transmitter 60 may include a mower blade rotating switch 65, a mower blade rotation selector switch 66, a mowing height adjusting switch 67, a start button S1, an emergency stop button S2, a traveling speed variable dial D1, and a right-and-left motor balance variable dial D2.

The mower blade rotating switch 65 transmits an operation signal to the control unit 50 to start and stop the rotation of the working device drive motor 21. The mower blade rotation selector switch 66 transmits an operation signal to the control unit 50 to switch between the forward rotation and the backward rotation of the working device drive motor 21. The mowing height adjusting switch 67 transmits an operation signal to the control unit 50 to move the electric actuator 40, which raises and lowers the working device, up or down.

The start button S1 is a switch to activate the remote transmitter 60. The emergency stop button S2 transmits an operation signal to the control unit 50 to stop the unmanned traveling working machine 1 urgently. The traveling speed variable dial D1 is a maximum speed adjusting part to set the maximum traveling speed of the unmanned traveling working machine 1 traveling forward or backward by operating the forward-and-backward traveling control lever 61A. The traveling speed variable dial D1 transmits an operation signal indicating the set maximum speed to the control unit 50.

Depending on the set maximum speed, the manipulated variable of the lever (for example, 50%) is converted to the maximum operation angle range of the control lever unit 61 (100%) to control the traveling speed. To be more specific, even though the initial maximum speed is set to 4 km/h, the traveling speed does not exceed 2 km/h when the maximum speed is set to 2 km/h by the traveling speed variable dial D1, and then the lever is operated to its maximum extent. When the manipulated variable of the lever is 50 %, the traveling speed becomes 1 km/h corresponding to 50 % of 2 km/h, and therefore it is possible to stabilize the variation in the traveling speed of the machine body 1A with respect to the operation of the lever. That is, it is possible to maintain and reproduce the traveling speed that provides the most stable travel as the maximum traveling speed without fine control of the lever. On the other hand, in a case where the maximum traveling speed is maintained at the initial maximum speed of 4 km/h, and the lever is turned by an angle corresponding to 50 %, the traveling speed is 2 km/h. As a result, it is possible to control the speed within a wide range from 0 to 4 km/h with fine control of the lever.

The right-and-left motor balance variable dial D2 is a motor balance adjusting part, and it transmits an operation signal to the control unit 50 to set a constant balance between the rotational speeds of the traveling device drive motors 16A and 16B in the neutral state of the right-and-left steering control lever 61B.

The right-and-left motor balance variable dial D2 is used to travel the unmanned traveling working machine 1 along contour lines of a sloping site. In this case, even when the rotational speeds of the right-and-left traveling device drive motors 16A and 16B are the same as one another, the traveling direction of the machine body 1A faces downward due to the gravity of the unmanned traveling working machine 1. In order to avoid this and move the machine body 1A horizontally along the contour lines of the sloping site, the traveling device drive motor on the downward side of the gravitational direction is rotated faster than the traveling device drive motor on the upward side of the gravitational direction. In this case, the ratio between the rotational speeds of the traveling device drive motors is adjusted based on the slope angle of the site by using the right-and-left motor balance variable dial D2. The set balance between the right and left motors is configured in the circuit to be independently maintained even when the selector switch 64 is operated. By this means, stable travel on a sloping surface can be achieved without additional operation when the reciprocating motion is switched.

In the unmanned traveling working machine system 100 according to the embodiment of the invention, the remote transmitter 60 includes the forward-and-backward switching section 62A configured to switch the traveling direction of the machine body 1A from forward to backward or from backward to forward corresponding to one operating direction of the forward-and-backward traveling control lever 61A. Therefore, it is possible to eliminate discomfort when the unmanned traveling working machine 1 is moving forward or backward by ensuring that the machine body 1A always moves forward in accordance with the direction the operator of the remote transmitter 60 is facing.

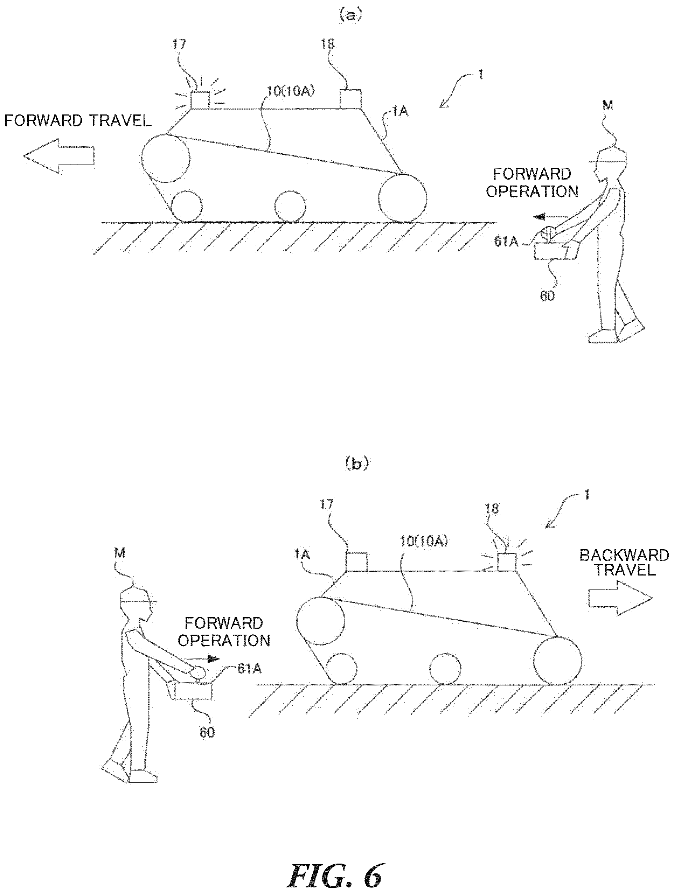

Fig. 6 shows an example of using the unmanned traveling working machine system 100. Fig. 6(a) shows a state in which the machine body 1A of the unmanned traveling working machine 1 moves forward in accordance with the direction an operator M faces. In this case, the forward-and-backward switching section 62A of the remote transmitter 60 is in the default state, and the operator M moves the forward-and-backward traveling control lever 61A to the forward operation position to move the machine body 1A forward in accordance with the direction the operator M faces.

On the other hand, Fig. 6(b) shows a state in which the machine body 1A of the unmanned traveling working machine 1 moves backward in accordance with the direction the operator M faces. In this case, the forward-and-backward switching section 62A of the remote transmitter 60 is in the switched state, and therefore the operator M moves the forward-and-backward traveling control lever 61A to the forward operation position to move the machine body 1A backward in accordance with the direction the operator M faces.

By appropriately switching the forward-and-backward switching section 62A of the remote transmitter 60, the operator M can always set the forward-and-backward traveling control lever 61A to the forward operation position to move the machine body 1A of the unmanned traveling working machine 1 toward the direction he is facing.

In the illustrated example, the machine body 1A of the unmanned traveling working machine 1 includes indicators (for example, indicator lights) 17 and 18. When the forward-and-backward switching section 62A is in the default state, an operation signal is transmitted from the remote transmitter 60 to light the indicator 17 installed in the front side of the machine body 1A. When the forward-and-backward switching section 62A is switched, an operation signal is transmitted from the remote transmitter 60 to light the indicator 18 installed in the rear side of the machine body 1A. In this way, by lighting the indicators 17 and 18 reflecting the current state of the forward-and-backward switching section 62A, it is possible to visually recognize the traveling direction of the machine body 1A corresponding to the forward operation (one operating direction) of the forward-and-backward control lever 61A. As a result, it is possible to prevent wrong operation and feel comfortable with the operation.

In the above description, the working device 20 of the unmanned traveling working machine 1 has been illustrated as an example of a working device for mowing work. However, an accommodation device such as a basket may be provided as a working device in the unmanned traveling working machine 1 to perform carrying work. Also, a power generator or a power storage device may be provided as a working device in the unmanned traveling working machine 1 to serve as a movable power generator.

As described above, the embodiments of the present invention have been described in detail with reference to the drawings. However, the specific configuration is not limited to the embodiments, and the design can be changed without departing from the scope of the present invention. In addition, the above-described embodiments can be combined by utilizing each other's technology as long as there is no particular contradiction or problem in the purpose and configuration.

### Reference Signs List

1: unmanned traveling working machine, 1A: machine body,
1A1, 1A2: support,
10(10A, 10B): traveling device, 11: drive sprocket,
12, 13, 14: driven wheel, 15: crawler,
16(16A, 16B): traveling device drive motor,
16A1, 16A2: gearbox, 17, 18: indicator,
20: working device, 21: working device drive motor,
22: mower blade, 30 drive source, 31: engine unit,
31A: engine, 31B: alternator,
32: power generator unit, 33: propeller shaft,
40: electric actuator,
50: control unit, 51: receiver, 52: battery,
60: remote transmitter, 61: control lever unit,
61A: forward-and-backward traveling control lever,
61B: right-and-left steering control lever,
61T: control lever position detector,
62: signal generator,
62A: forward-and-backward switching section,
63: transmitter, 64: selector switch,
65: mower blade rotating switch,
66: mower blade rotation selector switch,
67: mowing height adjusting switch,
S1: start button, S2: emergency stop button,
D1: traveling speed variable dial,
D2: right-and-left motor balance variable dial,
100: unmanned traveling working machine system

## Claims

1. An unmanned traveling working machine system comprising a remote transmitter configured to be operated to travel a machine body without an operator to perform work,
wherein the remote transmitter includes a control lever unit configured to travel the machine body forward or backward, **characterized in that**
the remote transmitter includes a forward-and-backward switching section configured to switch a traveling direction of the machine body from forward to backward or from backward to forward corresponding to one operating direction of the control lever unit.

2. The unmanned traveling working machine system according to claim 1, wherein:
the machine body includes an indicator configured to allow an operator to visually recognize the traveling direction of the machine body corresponding to one operating direction of the control lever unit.

3. The unmanned traveling working machine system according to one of claims 1 and 2, wherein:
the machine body includes a pair of drive motors configured to drive right and left traveling devices respectively; and
the remote transmitter includes a motor balance adjusting part configured to set a constant balance between rotational speeds of the pair of drive motors.

4. The unmanned traveling working machine system according to claim 1, wherein:
the remote transmitter includes a maximum speed adjusting part; and
a traveling speed of the machine body is controlled depending on the settings of the maximum speed adjusting part and a manipulated variable of the control lever unit.

5. The unmanned traveling working machine system according to claim 1, wherein:
the work is mowing work; and
the remote transmitter controls traveling of the machine body and the work.
